# EUROPÄISCHE PATENTSCHRIFT

(11) **EP 0 856 104 B1**
(45) Veröffentlichungstag und Bekanntmachung des Hinweises auf die Patenterteilung: **03.01.2001**
(21) Anmeldenummer: 96932456.5
(22) Anmeldetag: 01.10.1996
(51) Int. Cl.: F03G 6/06, F01K 23/10

(54) **VERFAHREN ZUR ERZEUGUNG VON ENERGIE UND KRAFTWERKSANLAGE ZUR DURCHFÜHRUNG DES VERFAHRENS**
ENERGY-GENERATION PROCESS AND POWER STATION FOR CARRYING OUT THE PROCESS
PROCEDE DE PRODUCTION D'ENERGIE ET CENTRALE ELECTRIQUE POUR LA MISE EN OEUVRE DE CE PROCEDE

(30) Priorität: 17.10.1995 DE 19538670
(43) Veröffentlichungstag der Anmeldung: 05.08.1998
(73) Patentinhaber: Deutsches Zentrum für Luft- und Raumfahrt e.V, 53127 Bonn (DE)
(72) Erfinder: TRÄNKENSCHUH, Hans-Christian, D-91301 Forchheim (DE); RIPPEL, Reinhard, D-91096 Möhrendorf (DE); CIRKEL, Hans-Jürgen, D-91080 Uttenreuth (DE); KÖHLER, Wolfgang, D-90562 Kalchreuth (DE); KASTNER, Wolfgang, D-91074 Herzogenaurach (DE)
(74) Vertreter: Selting, Günther, Dipl.-Ing.
(86) Internationale Anmeldenummer: DE9601885
(87) Internationale Veröffentlichungsnummer: WO9714887

(56) Entgegenhaltungen:
- EP-A- 0 526 816
- EP-A- 0 664 377
- WO-A-95/11371
- WO-A-96/31697
- DE-A- 4 126 036
- DE-A- 4 126 038
- DE-A- 4 409 197
- US-A- 5 444 972
- BWK BRENNSTOFF WARME KRAFT, Bd. 47, Nr. 7/08, 1.Juli 1995, Seiten 303-308, XP000520839 MARKO A: "VERBESSERUNG FOSSILGEFEUERTER DAMPFKRAFTWERKE DURCH SOLARE WAERMEZUFUHR"

## Beschreibung

Die Erfindung bezieht sich auf ein Verfahren zur Erzeugung von Energie und eine Kraftwerksanlage zur Durchführung des Verfahrens.

Es ist bekannt, daß bei Solarkraftwerken die am Erdboden einfallende Sonnenstrahlung als Wärmequelle für eine nachgeschaltete Energieumwandlung verwendet wird. Beispiele für solarthermische Kraftwerke sind Parabolrinnen, Turm- und Dish-Kraftwerke.

Bei solarthermischen Kraftwerken wird das Wärmeträgermedium in einem primären Kollektorkreislauf mit speziell gestalteten Solarstrahlungsempfängern einem Receiver zugeführt. Die Solarstrahlung wird mit am Erdboden aufgestellten Spiegeln, den Heliostaten, aufgefangen und auf den Receiver konzentriert. Der Receiver ist beispielsweise im Turm eines Turm-Kraftwerkes oder in einem Dish-Kraftwerk angeordnet. Im Receiver wird anschließend das Wärmeträgermedium erwärmt. Wird das Wärmeträgermedium, beispielsweise Wasser, direkt in dem Receiver verdampft, so spricht man von der Direktverdampfung. Bei der indirekten Verdampfung wird die Wärme von dem Wärmeträgermedium in eine dem Receiver nachgeschaltete Vorrichtung transportiert und hier verdampft. Als solaren Dampf, d.h. mit anderen Worten als Produkt der Verdampfung aufgrund der einwirkenden Sonnenstrahlung, erhält man entweder solar überhitzten Dampf oder Naßdampf. Der Naßdampf besteht aus den zwei Komponenten Wasser und Dampf.

Bei einem Dampfkraftwerk wird in einem Dampferzeuger durch die Zuführung von Wärme Wasser verdampft. Der Dampf erzeugt bei der Entspannung in einer Dampfturbine die Energie zum Antrieb eines Generators. Der aus der Dampfturbine austretende Dampf wird in einem Kondensator bei einem Druck, der erheblich unter dem Atmosphärendruck liegt, verflüssigt und von einer Speisewasserpumpe dem Dampferzeuger wieder zugeführt. Eine merkliche Verbesserung des Wirkungsgrades ermöglichen die Gasturbinen-Dampfturbinenkraftwerke, auch GuD-Kraftwerke genannt. In ihnen werden die heißen Abgase einer Gasturbine dem Dampferzeuger zugeführt. GuD-Kraftwerke sind beispielsweie aus dem Artikel "Dampfturbinen für GuD-Kraftwerke" von Wilhelm Engelke, Brennstoff-Wärme-Kraft 41(1989), Seiten 335 bis 342, bekannt.

Die Verkoppelung des primären Kollektorkreislaufes eines Solarkraftwerkes mit dem konventionellen Wasser-Dampf-Kreislauf eines fossil befeuerten Kraftwerkes ist z.B. aus der Veröffentlichung "Solare Farmkraftwerke und Direktverdampfung in Parabolrinnenkollektoren" von M. Müller und K. Hennecke, Forschungsverbund Sonnenenergie: "Themen 93/94", Seiten 57 bis 63, bekannt. Aus dem Stand der Technik ist jedoch nur das Einspeisen von solar überhitztem Dampf aus einem Solarkraftwerk in ein fossil befeuertes Kraftwerk bekannt.

Die Verwendung von solar überhitztem Dampf erweist sich dabei jedoch als aufwendig. Zum einen bedarf es eines erheblichen Aufwandes bei der Herstellung des solar überhitzten Dampfes im Solarkraftwerk. Die Herstellung erfordert eine aufwendig geregelte Wasserzufuhr für den Receiver, die mit einem erheblichen Kostenaufwand verbunden ist. Zum anderen treten bei solar überhitztem Dampf hohe Temperaturen im Receiver auf, die zu einer verkürzten Lebensdauer der Receiverkomponenten führen. Die Handhabung des solar überhitzten Dampfes im fossil befeuerten Kraftwerk erfordert den Einbau von zusätzlichen Vorrichtungen. Dadurch entstehen erhebliche Mehrkosten.

Aus WO 95/11371 ist ein Verfahren mit dem Oberbegriff des Patentanspruchs 1 und eine Kraftwerksanlage mit dem Oberbegriff des Patentanspruchs 8 bekannt. Hierbei werden die Abgase einer Gasturbine einem Rekuperator zugeführt, durch welchen der Wasser-Dampf-Kreislauf einer Dampfturbine verläuft. Der Rekuperator ist Bestandteil des Kreislaufs des die Gasturbine enthaltenden fossil befeuerten Kraftwerks. Das Solarkraftwerk erzeugt Dampf in der Form von Sattdampf, also von solarüberhitztem Dampf.

Der Erfindung liegt nun die Aufgabe zugrunde, ein Verfahren zur Erzeugung von Energie anzugeben, bei dem eine Verkoppelung des primären Kollektorkreislaufes des Solarkraftwerkes mit dem Wasser-Dampf-Kreislauf des fossil befeuerten Kraftwerkes stattfindet, wobei bei der Einbindung des primären Kollektorkreislaufes in den Wasser-Dampf-Kreislauf weitgehend die Komponenten des Wasser-Dampf-Kreislaufes benutzt werden sollen und bei dem zusätzliche Kosten eingespart werden. Außerdem soll eine Kraftwerksanlage zur Durchführung dieses Verfahrens angegeben werden.

Die erstgenannte Aufgabe wird gemäß der Erfindung gelöst durch ein Verfahren zur Erzeugung von Energie, bei dem der in einem Solarkraftwerk erzeugte Naßdampf in einen Wasser-Dampf-Kreislauf eines fossil befeuertes Kraftwerkes eingespeist wird.

Die zweitgenannte Aufgabe wird gemäß der Erfindung gelöst durch eine Kraftwerksanlage zur Erzeugung von Energie, bei der ein Solarkraftwerk zum Einspeisen von Naßdampf in einen Wasser-Dampf-Kreislauf eines fossil befeuertes Kraftwerkes vorgesehen ist.

Bei der Einbindung des primären Kollektorkreislaufes des Solarkraftwerkes in den Wasser-Dampf-Kreislauf des fossilbefeuerten Kraftwerkes werden weitgehend die Komponenten des Wasser-Dampf-Kreislaufes benutzt und dadurch zusätzliche Kosten für weitere Komponenten eingespart. Die Erzeugung von Naßdampf in dem Solarkraftwerk ist mit geringem regeltechnischen und apparativen Aufwand verbunden und zugleich erhält man einen größeren Durchsatz an Naßdampf als bei der Produktion von solar überhitztem Dampf. Durch die Verwendung von Naßdampf kann zudem die Lebensdauer der Receiverkomponenten verlängert werden. Dadurch kann eine hohe Verfügbarkeit der Kraftwerksanlage, die ein Solarkraftwerk und ein fossil befeuertes Kraftwerk umfaßt, gesichert werden.

Vorzugsweise wird der Naßdampf in ein Wasser-Dampf-Trenngefäß eines Abhitzedampferzeugers eines GuD-Kraftwerkes eingespeist.

Insbesondere wird der Naßdampf in eine erste Überströmleitung eines Dampfkraftwerkes eingespeist, wobei die erste Überströmleitung zwischen einer Hoch- und einer Mitteldruckturbine angeordnet ist.

In einer weiteren Ausgestaltung durchströmt der Naßdampf vor dem Einspeisen in die erste Überströmleitung ein Wasser-Dampf-Trenngefäß.

Vorzugsweise wird der Naßdampf in eine Abscheideflasche eines Zwangdurchlaufkessels eingespeist. Als Abscheideflasche und Zwangdurchlaufkessel können beispielsweise eine Benson-Flasche bzw. ein Benson-Kessel verwendet werden.

Insbesondere wird der Naßdampf zwischen einem Verdampfer und einem Abscheider in den Zwangdurchlaufkessel eingespeist.

In einer weiteren Ausgestaltung wird der Naßdampf in eine Trommel eines Umlaufkessels eingespeist.

Weitere vorteilhafte Ausgestaltungen sind in den Unteransprüchen beschrieben.

Zur weiteren Erläuterung der Erfindung wird auf die Ausführungsbeispiele der Zeichnung verwiesen. Es zeigen:
- FIG 1: ein Schaltbild eines GuD-Kraftwerks;
- FIG 2: ein Schaltbild eines Dampfkraftwerks;
- FIG 3: ein Schaltbild für einen Zwangdurchlaufkessel und
- FIG 4: ein Schaltbild für einen Umlaufkessels.

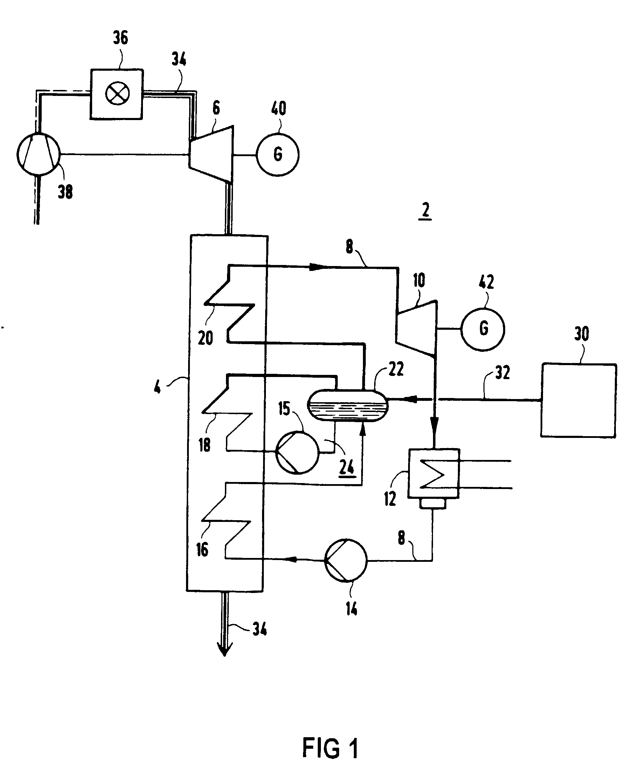

Gemäß FIG 1 umfaßt ein GuD-Kraftwerk 2 einen Abhitzedampferzeuger 4. Dieser wird von dem heißen Abgas einer Gasturbine 6 durchströmt und dient zur Dampferzeugung, wobei dessen Heizflächen in einen Wasser-Dampf Kreislauf 8 einer Dampfturbine 10 geschaltet sind.

Der aus der Dampfturbine 10 austretende Dampf wird in einem Kondensator 12 bei einem Druck, der erheblich unter dem Atmosphärendruck liegt, verflüssigt und von einer ersten Speisewasserpumpe 14 dem Abhitzedampferzeuger 4 zugeführt. Der Abhitzedampferzeuger 4 umfaßt einen Vorwärmer 16, einen Verdampfer 18 und einen Überhitzer 20. Das Wasser durchströmt zunächst den Vorwärmer 16 und gelangt in ein Wasser-Dampf-Trenngefäß 22. Der Wasserdampf aus dem Wasser-Dampf-Trenngefäß 22 wird über den Überhitzer 20 wieder in die Dampfturbine 10 eingespeist. Damit ist der Wasser-Dampf-Kreislauf 8 wieder geschlossen.

Der Dampf wird dem Wasser-Dampf-Trenngefäß 22 auf zwei Wegen zugeführt. Zum einen wird über einen Verdampferkreislauf 24 das Wasser aus dem Wasser-Dampf-Trenngefäß 22 teilweise abgeführt und über eine weitere Speisewasserpumpe 15 dem Verdampfer 18 zugeführt. In dem Verdampfer 18 wird das Wasser verdampft und anschließend wieder dem Wasser-Dampf-Trenngefäß 22 zugeführt.

Zum anderen wird Naßdampf, der in einem Solarkraftwerk 30 erzeugt wird, über eine Leitung 32 ebenfalls dem Wasser-Dampf-Trenngefäß 22 zugeführt. Bei einer vorgegebenen Größe des Solarkraftwerkes 30 wird bei der Erzeugung von Naßdampf ein wesentlich größerer Volumenstrom erzeugt, als wenn anstelle von Naßdampf solar überhitzter Dampf verwendet wird. Demzufolge kann bei der Verwendung von Naßdampf dem Wasser-Dampf-Trenngefäß 22 ein wesentlich größerer Anteil von Dampf aus dem Solarkraftwerk 30 dem Wasser-Dampf-Trenngefäß 22 zugeführt werden. Es bedarf keiner gesonderten Vorrichtung um den Naßdampf dem Wasser-Dampf-Trenngefäß 22 zuzuführen. Er wird direkt in dasselbige eingespeist.

Die zweite Speisewasserpumpe 15 des Verdampferkreislaufes 24 kann bei entsprechender Ausführung des Verdampferkreislaufes 24 entfallen.

In einer Leitung 34 sind der Gasturbine 6 eine Brennkammer 36 und ein Verdichter 38 in Durchflußrichtung vorgeschaltet. Die Gasturbine 6 und die Dampfturbine 10 erzeugen die Energie für die Generatoren 40 bzw. 42.

In einer nicht weiter dargestellten Ausführungsform umfaßt die Dampfturbine 10 eine Hochdruck- und eine Niederdruckturbine oder eine Hochdruck-, eine Mitteldruck- und eine Niederdruckturbine. Der von dem Solarkraftwerk 30 erzeugte Naßdampf wird dann in eines der Wasser-Dampf-Trenngefäße geleitet, die den entsprechenden Turbinenteilen, wie Hochdruck-, Mitteldruck- oder Niederdruckturbine, zugeordnet sind.

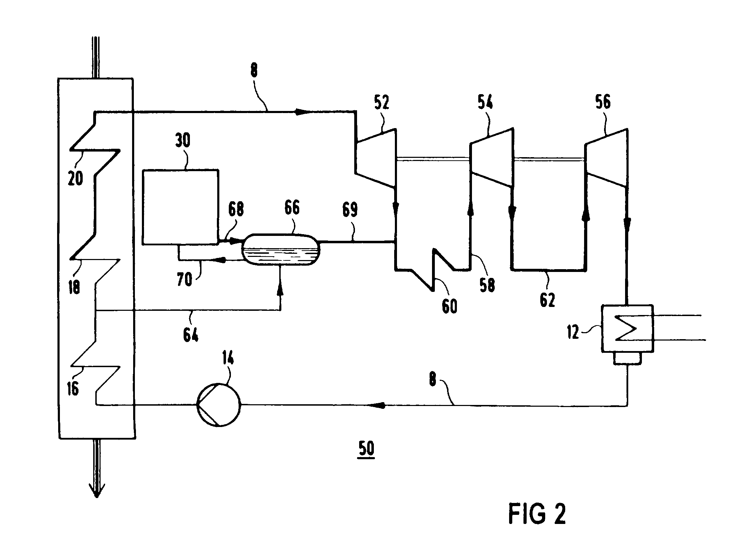

Entsprechend FIG 2 umfaßt der Wasser-Dampf-Kreislauf 8 eines Dampfkraftwerkes 50 der Reihenfolge nach eine Hochdruckturbine 52, eine Mitteldruckturbine 54 und eine Niederdruckturbine 56. Zwischen der Hochdruckturbine 52 und der Mitteldruckturbine 54 ist eine erste Überströmleitung 58 mit einem in ihr angeordneten Zwischenüberhitzer 60 parallel zum Wasser-Dampf-Kreislauf 8 angeordnet. Zwischen der Mitteldruckturbine 54 und der Niederdruckturbine 56 ist eine zweite Überströmleitung 62 parallel zum Wasser-Dampf-Kreislauf 8 angeordnet.

Aus dem Wasser-Dampf-Kreislauf 8 zweigt zwischen dem Vorwärmer 16 und dem Verdampfer 18 eine Leitung 64 ab, mit der ein Anteil von Wasser dem Wasser-Dampf-Kreislauf 8 entzogen und über eine Leitung 70 dem Solarkraftwerk 30 zugeführt wird. Zwischen den beiden Leitungen 64 und 70 ist ein Wasser-Dampf-trenngefäß 66 angeordnet. Das Solarkraftwerk 30 speist den Naßdampf über eine Leitung 68 direkt in das Wasser Dampf-Trenngefäß 66 ein. Das aus dem Naßdampf separierte Wasser wird wieder über die Leitung 70 in das Solarkraftwerk 30 eingespeist, währenddessen der separierte Dampf über eine Leitung 69 in die erste Überströmleitung 58 zwischen der Hochdruckturbine 52 und dem Zwischenüberhitzer 60 eingespeist wird.

In einer vereinfachten Ausführungsform wird auf das Wasser-Dampf-Trenngefäß 66 verzichtet. Dadurch wird das Solarkraftwerk 30 direkt mit vorgewärmtem Wasser aus dem Wasser-Dampf-Kreislauf 8 versorgt und speist seinerseits Naßdampf in die erste Überströmleitung 58 ein.

Der Abhitzedampferzeuger 4 erhält seine Wärme beispielsweise durch eine externe fossile Befeuerung.

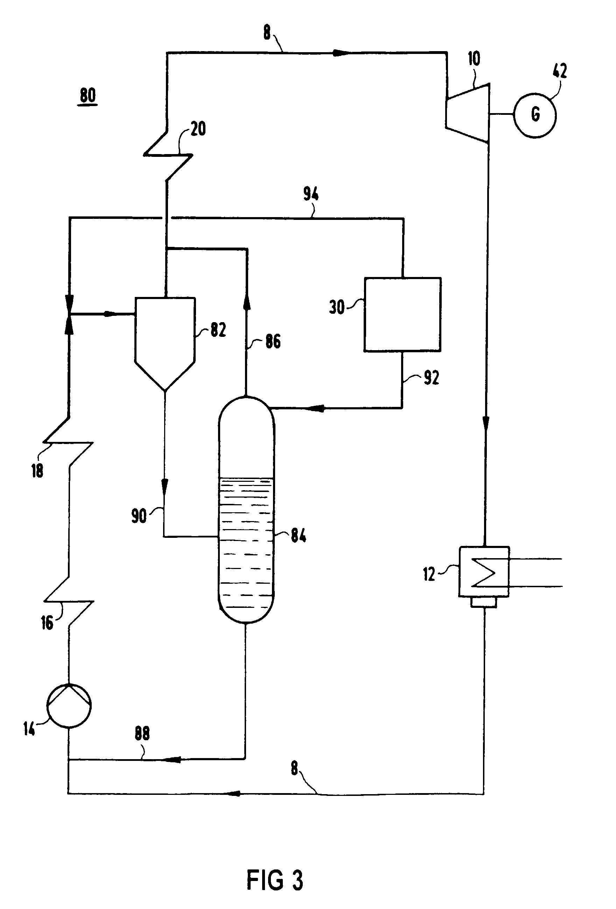

In FIG 3 ist in dem Wasser-Dampf-Kreislauf 8 eines Zwangdurchlaufkessels 80 zwischen dem Verdampfer 18 und dem Überhitzer 20 ein Wasser-Dampf-Abscheider 82 angeordnet.

Aus einer Abscheideflasche 84 wird Wasserdampf über eine Leitung 86 in den Wasser-Dampf-Kreislauf 8 zwischen dem Wasser-Dampf-Abscheider 82 und dem Überhitzer 20 eingespeist. Ein Anteil des Wassers aus der Abscheideflasche 84 wird über eine Leitung 88 in den Wasser-Dampf-Kreislauf 8 zwischen dem Kondensator 12 und der Speisewasserpumpe 14 eingespeist. Aus dem Wasser-Dampf-Abscheider 82 wird ein Anteil des Wassers über eine Leitung 90 der Abscheideflasche 84 zugeführt.

Der Naßdampf aus dem Solarkraftwerk 30 wird entweder über eine Leitung 92 direkt in die Abscheideflasche 84 eingespeist oder über eine Leitung 94 dem Wasser-Dampf-Kreislauf 8 zwischen dem Verdampfer 18 und dem Wasserdampfabscheider 82 zugeführt, wodurch der Naßdampf unmittelbar in den Wasser-Dampf-Abscheider 82 eingespeist wird. Das Wasser für den Betrieb des Solarkraftwerkes 30 wird, wie in FIG 2 dargestellt, dem Wasser-Dampf-Kreislauf 8 zwischen dem Vorwärmer 16 und dem Verdampfer 18 entnommen.

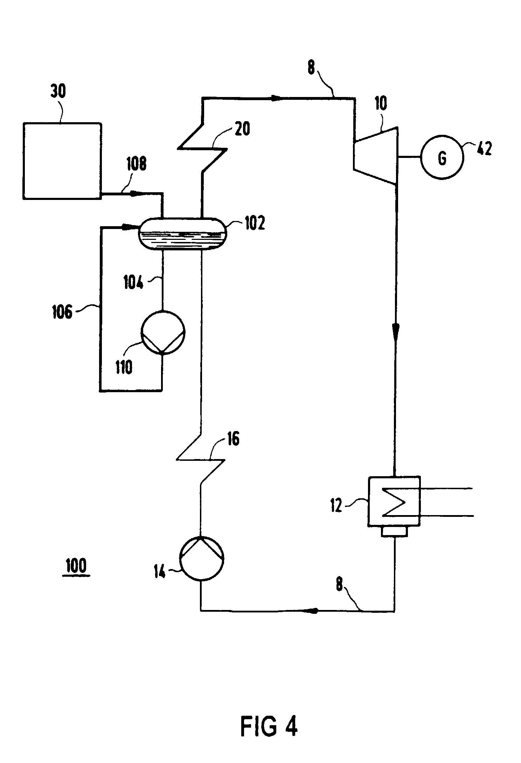

Gemäß FIG 4 umfaßt ein Umlaufkessel 100 eine Trommel 102, die in dem Wasser-Dampf-Kreislauf 8 zwischen dem Vorwärmer 16 und dem Überhitzer 20 angeordnet ist. Aus der Trommel 102 wird ein Anteil des Wassers über ein Fallrohr 104 mindestens einem Verdampferrohr 106 zugeführt. Das verdampfte Wasser gelangt aus dem Verdampferrohr 106 wieder direkt in die Trommel 102. Der Wasserdampf wird anschließend in dem Wasser-Dampf-Kreislauf 8 dem Überhitzer 20 zugeführt. Durch den Einsatz des Verdampferrohres 106 entfällt in dieser Ausführungsform der Verdampfer 18. Der Naßdampf aus dem Solarkraftwerk 30 wird über eine Leitung 108 in die Trommel 102 eingespeist.

Zur Sicherstellung eines bestimmten Massenstromes in dem Verdampferrohr 106 wird in dem Fallrohr 104 eine Umwälzpumpe 110 angeordnet.

## Patentansprüche

1. Verfahren zur Erzeugung von Energie, bei dem der in einem Solarkraftwerk (30) erzeugte Dampf in einen Wasser-Dampf-Kreislauf (8) eines fossil befeuertes Kraftwerkes eingespeist wird, dadurch gekennzeichnet, daß der im Solarkraftwerk (30) erzeugte Dampf als Naßdampf in den Wasser-Dampf-Kreislauf eingespeist wird.

2. Verfahren nach Anspruch 1, bei dem der Naßdampf in ein wird. Wasser-Dampf-Trenngefäß (22) eines Abhitzedampferzeugers (4) eines GuD-Kraftwerkes (2) eingespeist wird.

3. Verfahren nach Anspruch 1, bei dem der Naßdampf in eine erste Überströmleitung (58) eines Dampfkraftwerkes (50) eingespeist wird.

4. Verfahren nach Anspruch 3, bei dem der Naßdampf vor dem Einspeisen in die erste Überströmleitung (58) ein Wasser-Dampf-Trenngefäß (66) durchströmt.

5. Verfahren nach Anspruch 1, bei dem der Naßdampf in eine Abscheideflasche (84) eines Zwangdurchlaufkessels (80) eingespeist wird.

6. Verfahren nach Anspruch 5, bei dem der Naßdampf zwischen einem Verdampfer (18) und einem Wasser-Dampf-Abscheider (82) in den Wasser-Dampf-Kreislauf (8) eingespeist wird.

7. Verfahren nach Anspruch 1, bei dem der Naßdampf in eine Trommel (102) eines Umlaufkessels (100) eingespeist wird.

8. Kraftwerksanlage zur Erzeugung von Energie, bei der ein Solarkraftwerk (30) zum Einspeisen von Dampf in einen Wasser-Dampf-Kreislauf (8) eines fossil befeuertes Kraftwerkes vorgesehen ist, dadurch gekennzeichnet, daß das Solarkraftwerk als Naßdampferzeuger ausgebildet ist.

9. Kraftwerksanlage nach Anspruch 8, bei der ein Wasser-Dampf-Trenngefäß (22) eines Abhitzedampferzeugers (6) eines GuD-Kraftwerkes (2) zum Einspeisen des Naßdampfes vorgesehen ist.

10. Kraftwerksanlage nach Anspruch 8, bei der eine erste Überströmleitung (58) eines Dampfkraftwerkes (50), wobei die Überströmleitung (58) zwischen einer Hoch- (52) und einer Mitteldruckturbine (54) angeordnet ist, zum Einspeisen des Naßdampfes vorgesehen ist.

11. Kraftwerksanlage nach Anspruch 8, bei der eine Abscheideflasche (84) eines Zwangdurchlaufkessels (80) zum Einspeisen des Naßdampfes vorgesehen ist.

12. Kraftwerksanlage nach Anspruch 11, bei der eine Leitung (94), die zwischen dem Verdampfer (18) und einem Wasser-Dampf-Abscheider (82) in den Wasser-Dampf-Kreislauf (8) mündet, zum Einspeisen des Naßdampfes vorgesehen ist.

13. Kraftwerksanlage nach Anspruch 8, bei der eine Trommel (102) eines Umlaufkessels (100) zum Einspeisen des Naßdampfes vorgesehen ist.

## Claims

1. Method for power generation, wherein the steam generated in a solar power station (30) is fed into a water-steam circuit (8) of a fossil fuel-fired power station,
characterized in that
the steam generated in the solar power station (30) is fed as wet steam into the water-steam circuit.

2. Method according to claim 1, wherein the wet steam is fed into a water-steam separating vessel (22) of a waste heat steam generator (4) of a combined cycle power station (2).

3. Method according to claim 1, wherein the wet steam is fed into a first cross-over pipe (58) of a steam power station (50).

4. Method according to claim 3, wherein the wet steam passes through a water-steam separating vessel (66) prior to be fed into the first cross-over pipe (58).

5. Method according to claim 1, wherein the wet steam is fed into a separating vessel (84) of a once-through boiler (80).

6. Method according to claim 5, wherein the wet steam is fed into the water-steam circuit (8) at a location between a evaporator (18) and a water-steam separator (82).

7. Method according to claim 1, wherein the wet steam is fed into a drum (102) of a circulation boiler (100).

8. Power plant for power generation, wherein a solar power station (30) for feeding steam into a water-steam circuit (8) of a fossil fuel-fired power station is provided,
characterized in that
the solar power station is configured as wet steam generator.

9. Power plant according to claim 8, wherein a water-steam separating vessel (22) of a waste heat steam generator (4) of a combined cycle power station (2) is provided for feeding the wet steam.

10. Power plant according to claim 8, wherein a first cross-over pipe (58) of a steam power station (50) is provided for feeding the wet steam with the cross-over pipe (58) being arranged between a high pressure (52) and an intermediate pressure (54) turbine.

11. Power plant according to claim 8, wherein a separating vessel (84) of a once-through boiler (80) is provided for feeding the wet steam.

12. Power plant according to claim 11, wherein a line (94) ending in the water-steam circuit (8) at a location between the evaporator (18) an a water-steam separator (82) is provided for feeding the wet steam.

13. Power plant according to claim 8, wherein a drum (102) of a circulation boiler (100) is provided for feeding the wet steam.

## Revendications

1. Procédé de production d'énergie dans lequel la vapeur produite dans une centrale à énergie solaire (30) est introduite dans un circuit vapeur-eau (8) d'une centrale électrique à énergie fossile, caractérisé en ce que la vapeur produite dans la centrale à énergie solaire (30) est introduite sous forme de vapeur humide dans le circuit vapeur-eau.

2. Procédé selon la revendication 1, dans lequel la vapeur humide est introduite dans un récipient séparateur vapeur-eau (22) d'un générateur de vapeur à chaleur perdue (4) d'une centrale électrique à turbines à gaz et à vapeur (2).

3. Procédé selon la revendication 1, dans lequel la vapeur humide est introduite dans une première conduite de passage de la vapeur (58) d'une centrale électrique à vapeur (50).

4. Procédé selon la revendication 3, dans lequel la vapeur humide passe dans un récipient séparateur vapeur-eau (66) avant d'être introduite dans la première conduite de passage de la vapeur (58).

5. Procédé selon la revendication 1, dans lequel la vapeur humide est introduite dans une bouteille de séparation (84) d'une chaudière à passage forcé unique (80).

6. Procédé selon la revendication 5, dans lequel la vapeur humide est introduite entre un évaporateur (18) et un séparateur vapeur-eau (82) dans le circuit vapeur-eau (8).

7. Procédé selon la revendication 1, dans lequel la vapeur humide est introduite dans un tambour (102) d'une chaudière à circulation d'eau forcée (100).

8. Centrale électrique de production d'énergie dans laquelle une centrale à énergie solaire (30) est prévue pour introduire de la vapeur dans un circuit vapeur-eau (8) d'une centrale électrique à énergie fossile, caractérisée en ce que la centrale à énergie solaire est conçue comme un générateur de vapeur humide.

9. Centrale électrique selon la revendication 8, dans laquelle un récipient séparateur vapeur-eau (22) d'un générateur de vapeur à chaleur perdue (4) d'une centrale électrique à turbines à gaz et à vapeur (2) est prévu pour introduire la vapeur humide.

10. Centrale électrique selon la revendication 8, dans laquelle une première conduite de passage de la vapeur (58) d'une centrale électrique à vapeur (50) est prévue pour introduire la vapeur humide, la conduite de passage de la vapeur (58) étant agencée entre une turbine haute pression (52) et une turbine moyenne pression (54).

11. Centrale électrique selon la revendication 8, dans laquelle une bouteille de séparation (84) d'une chaudière à passage forcé unique (80) est prévue pour introduire la vapeur humide.

12. Centrale électrique selon la revendication 11, dans laquelle une conduite (94), qui débouche entre l'évaporateur (18) et un séparateur vapeur-eau (82) dans le circuit vapeur-eau (8), est prévue pour introduire la vapeur d'eau.

13. Centrale électrique selon la revendication 8, dans laquelle un tambour (102) d'une chaudière à circulation d'eau forcée (100) est prévu pour introduire la vapeur d'eau.
